# EUROPÄISCHE PATENTANMELDUNG

(11) **EP 4 358 374 A1**
(43) Veröffentlichungstag der Anmeldung: **24.04.2024**
(21) Anmeldenummer: 23197050.0
(22) Anmeldetag: 13.09.2023
(51) Int. Cl.: H02K 5/22, H02K 11/33

(54) **ELEKTRISCHE VERBINDUNG MIT STROMSCHIENEN**

(30) Priorität: 19.10.2022 DE 102022211053
(71) Anmelder: Robert Bosch GmbH, 70442 Stuttgart (DE)
(72) Erfinder: Katlan, Gergo Jozsef, 1115 Budapest (HU); Winter, Thomas, 71732 Tamm (DE); Feigl, Markus, 71706 Markgroeningen (DE)

(57) **Zusammenfassung**

Die Erfindung bezieht sich auf eine elektrische Verbindung (16) von Profilen (36, 38) von Stromschienen (30, 32, 34) zwischen einer Elektronikkomponente (10) und einer elektrischen Maschine (14). Die an einem stationären ersten Verbindungsteil (26) aufgenommenen ersten Profile (36) und die an einem zweiten Verbindungsteil (28) einer in ihrer Einbauposition (50) angeordneten elektrischen Maschine (14) aufgenommenen zweiten Profile (38) definieren jeweils unterschiedliche Einbaulängen (44, 46, 48) der Stromschienen (30, 32, 34) und sind mittels einer Verschlusshülse (52) elektrisch miteinander verbunden.

## Beschreibung

### Technisches Gebiet

Die Erfindung bezieht sich auf eine elektrische Verbindung erster und zweiter Profile von Stromschienen zwischen einer Elektronikkomponente und einer elektrischen Maschine. Des Weiteren bezieht sich die Erfindung auf ein Verfahren zur Herstellung einer elektrischen Verbindung sowie auf die Verwendung der elektrischen Verbindung zwischen einer Leistungselektronik und einer elektrischen Maschine zum Antrieb eines Fahrzeugs und auf die Verwendung der elektrischen Verbindung zwischen einer Elektronikkomponente und einer elektrischen Maschine.

### Stand der Technik

DE 10 2010 019 656 B4 bezieht sich auf ein Positionsmessgerät mit einem teleskopierbaren Verbindungselement. Mit diesem sind zwei Kugelkörper miteinander verbunden. Damit kann neben einer mechanischen Verbindung eine Überprüfung der Positionierung durchgeführt werden. Aufgrund der unterschiedlichen Auszugslängen des Teleskopauszugs ist das Vermessen verschiedener Positionen möglich. Zur mechanisch steifen Ausgestaltung ist vorgesehen, dass das teleskopierbare Verbindungselement mehrere, parallel angeordnete Auszüge aufweist, an denen die Körper jeweils befestigt sind. Dadurch kann die Steifigkeit gegen eine mechanische Verformung erheblich verbessert werden. Es können zwei oder drei Auszüge parallel zueinander durch Verstrebungen verbunden oder über eine Scherenkinematik miteinander gekoppelt sein, um eine präzisere Zuordnung der Auszüge mehrerer Auszugselemente zu erreichen.

DE 103 00 006 D1 bezieht sich auf einen elektrischen Verbinder, umfassend u. a. eine mit einer elektrischen Leitung verbindbare Stromschiene, wobei wenigstens ein Kontakt eines elektrischen oder elektronischen Bauelements mit dem Anschlussabschnitt verbindbar ist. Der elektrische Verbinder kann so ausgebildet sein, dass die elektrischen Leitungen unlösbar mit der Stromschiene oder gegebenenfalls weiteren Kontaktelementen verbindbar sind, was bedeutet, dass zur Trennung der Verbindung Werkzeuge oder für die normale Verwendung untypisch hohe Kräfte und/oder Temperaturen aufzubringen wären. Insbesondere können die Enden für Lötverbindungen oder als Schneidklemmen ausgestaltet sein. Ein mit der Stromschiene beziehungsweise dem Anschlussabschnitt darauf verbundenes elektrisches oder elektronisches Bauelement ist bevorzugt mit einem Träger am Anschlussabschnitt befestigt, beispielsweise durch eine Klebung und/oder eine Lötverbindung.

DE 11 2012 002 310 B4 hat eine Anordnung mit einer Schmelzsicherung zum Gegenstand, umfassend unter anderem eine erste und zweite Kontaktzunge sowie einen Schmelzabschnitt, der die Kontaktzungen miteinander verbindet. Die Verbindung der Kontaktzungen kann asymmetrisch ausgeführt sein. Demnach kann die erste Kontaktzunge mit dem Durchbruch länger als die zweite Kontaktzunge ausgeführt sein. Dadurch wird ein ausreichender Freiraum für große Verbindungsvorrichtungen geschaffen. Die zweite Kontaktzunge liegt bevorzugt insbesondere flächig an der Verteilerschiene an, wobei Verteilerschiene und Kontaktzunge vorzugsweise durch eine nicht lösbare Fügeverbindung verbunden sind, d. h. ein Trennen nur unter Zerstörung der Fügeverbindung möglich ist. Ein Sicherungselement zur Sicherung an einer Einrichtung, insbesondere einem Befestigungselement und/oder Verbindungselement ist bevorzugt schienen- und/oder schenkelartig, insbesondere als Führungsschiene ausgeführt, durch welche eine seitliche Krafteinwirkung auf das Element abgeleitet wird.

Bei elektrisch angetriebenen Fahrzeugen werden heute E-Achsenmodule in verschiedenen Größen und Außenabmessungen eingesetzt. Dies ist zum einen abhängig von der Leistungsklasse, insbesondere vom Durchmesser der elektrischen Maschine und zum anderen vom zur Verfügung stehenden Bauraum hinsichtlich der Position einer Leistungselektronik in Bezug auf die elektrische Maschine. Daher besteht das Erfordernis, eine elektrische Schnittstelle, die in der Regel mehrere, bevorzugt drei starre, verschraubte Kupferschienen als Stromschienen umfasst, zwischen der Leistungselektronik und der elektrischen Maschine jeweils wieder an die Anforderungen des Kunden anzupassen, was einen nicht unerheblichen Aufwand mit sich bringt. Die verschiedenen Varianten der elektrischen Schnittstellen sind stets neu zu entwickeln, erfordern die Beschaffung unterschiedlicher Teile und stellen eine für die Fertigung ungünstige Varianz dar.

### Darstellung der Erfindung

Erfindungsgemäß wird eine elektrische Verbindung für erste und zweite Profile von Stromschienen zwischen einer Elektronikkomponente und einer elektrischen Maschine vorgeschlagen, wobei die an einem stationären Verbindungsteil aufgenommenen ersten Profile und die an einem zweiten Verbindungsteil einer in ihrer Einbauposition angeordneten elektrischen Maschine aufgenommenen zweiten Profile jeweils individuelle Einbaulängen der Stromschienen definieren und mittels einer Verschlusshülse elektrisch miteinander verbunden sind. Durch die erfindungsgemäß vorgeschlagene Lösung kann eine kostengünstig herstellbare, auf Lebensdauer haltbare und einfache elektrische Verbindung geschaffen werden, die insbesondere in einer definierten Einbauposition zwischen der Elektronikkomponente und der durch diese zu steuernden elektrischen Maschine positioniert werden kann. In der Einbauposition können besagte erste und zweite Profile auf definierte Einbaulängen angepasst werden, Toleranzen ausgleichen und in diesen definierten Einbaupositionen verliersicher sowie elektrisch leitend miteinander verbunden werden.

In vorteilhafter Ausgestaltung der erfindungsgemäß vorgeschlagenen elektrischen Verbindung sind die ersten Profile am ersten Verbindungsteil gelenkig an ersten Anlenkstellen gelagert. Dies erhöht den Freiheitsgrad hinsichtlich der Ausbildung der elektrischen Verbindung.

In einer weiteren vorteilhaften Ausführungsvariante der erfindungsgemäß vorgeschlagenen elektrischen Verbindung sind die zweiten Profile gelenkig am zweiten Verbindungsteil an zweiten Anlenkstellen gelagert. Auch hierdurch kann einer Vielzahl von Varianten hinsichtlich der Einbaupositionen aufgrund der Beweglichkeit Rechnung getragen werden.

In einer weiteren vorteilhaften Ausgestaltungsmöglichkeit der erfindungsgemäß vorgeschlagenen elektrischen Verbindung sind die ersten und zweiten Profile als Rechteckprofile oder auch als Profile mit quadratischem, rundem oder ringförmigem Querschnitt ausgeführt.

In einer weiteren Ausführungsvariante der erfindungsgemäß vorgeschlagenen elektrischen Verbindung ist die Verschlusshülse aus einem metallischen Material gefertigt. Dadurch kann einerseits deren Verformbarkeit begünstigt werden, andererseits ist eine elektrische Verbindung sichergestellt.

Die erfindungsgemäße elektrische Verbindung sieht vor, dass im Bodenbereich der Verschlusshülse und in an deren offenes Ende angrenzenden Bereichen Reibelemente vorgesehen sind. Durch die Reibelemente wird eine Verkrallung zwischen den Materialien sowohl der Verschlusshülse aus metallischem Material als auch der Profile begünstigt, was auch der Ausbildung der elektrischen Verbindung und deren Stromtragfähigkeit förderlich ist.

In einer weiteren vorteilhaften Ausgestaltung der erfindungsgemäß vorgeschlagenen elektrischen Verbindung ist die Verschlusshülse innerhalb eines Überlappungsbereichs zwischen den ersten und zweiten Profilen verliersicher aufgenommen.

Weiterhin sind die Profile aus einem elektrisch leitfähigen Material, insbesondere Kupfer oder Aluminium, gefertigt.

Darüber hinaus bezieht sich die Erfindung auf ein Verfahren zur Herstellung einer elektrischen Verbindung zwischen einer Elektronikkomponente und einer elektrischen Maschine, wobei die nachfolgenden Verfahrensschritte durchlaufen werden:
a) Einbau einer elektrischen Maschine in ihrer Einbauposition in der Umgebung einer Elektronikkomponente;
b) Herstellung der elektrischen Verbindung zwischen einem ersten Verbindungsteil mit ersten Profilen von Stromschienen und einem zweiten Verbindungsteil mit zweiten Profilen von Stromschienen;
c) Einstellen definierter Einbaulängen der Stromschienen zwischen dem ersten Verbindungsteil und dem zweiten Verbindungsteil und
d) Fixieren der ersten und zweiten Profile an jeder der Stromschienen innerhalb eines Überlappungsbereichs der ersten und zweiten Profile unter Einhaltung der definierten Einbaulängen der Stromschienen mittels einer Verschlusshülse.

Durch das erfindungsgemäß vorgeschlagene Verfahren kann die elektrische Verbindung vor Ort zwischen den elektrisch miteinander zu verbindenden Komponenten hergestellt werden, wobei insbesondere sich entsprechende Einbaulagen ergebende, definierte Einbaulängen beziehungsweise Winkellagen der Profile der Stromschienen berücksichtigt werden.

In vorteilhafter Weiterbildung des erfindungsgemäß vorgeschlagenen Verfahrens erfolgt ein Längenausgleich und/oder eine Längenanpassung zwischen den ersten und zweiten Profilen der Stromschienen vor der Montage der Verschlusshülse.

Bei der erfindungsgemäß vorgeschlagenen Lösung wird die Verschlusshülse bevorzugt aus einem plastisch verformbaren metallischen Material hergestellt, wobei die plastische Verformung eine verliersichere Anordnung im Überlappungsbereich der beiden Profile bewirkt.

Des Weiteren bezieht sich die Erfindung auf die Verwendung der elektrischen Verbindung zwischen einer Leistungselektronik und einer elektrischen Maschine zum Antrieb eines elektrisch angetriebenen Fahrzeugs. Weiterhin bezieht sich die Erfindung auf die Verwendung der elektrischen Verbindung zwischen einer Elektronikkomponente und einer elektrischen Maschine.

### Vorteile der Erfindung

Durch die erfindungsgemäß vorgeschlagene Lösung können Stromschienen, beispielsweise zur Verbindung einer Leistungselektronik und einer elektrischen Maschine einerseits zum Antrieb eines Fahrzeugs und andererseits zur Herstellung einer elektrischen Verbindung zwischen einer Elektronikkomponente und einer elektrischen Maschine bereitgestellt werden. Es wird durch die erfindungsgemäß vorgeschlagene Lösung eine Variante einer elektrischen Schnittstelle dargestellt, wodurch Kosten für die Entwicklung und die Beschaffung sowie die Anzahl der Fertigungskomponenten enorm gesenkt werden können. Durch die erfindungsgemäß vorgeschlagene Lösung besteht die Möglichkeit, mindestens eine Stromschiene, bevorzugt mehrere Stromschienen, die zwei sich überlappende, beispielsweise aus Kupfermaterial gefertigte Profile, wie beispielsweise Vierkantprofile, umfassen, über eine verstemmte Verschlusshülse miteinander zu verbinden, wobei die Überlappung zwischen den einzelnen Profilen der jeweiligen Stromschiene durch den Einbauort beziehungsweise die Einbaulage und die Relativposition zwischen der Elektronikkomponente einerseits und der elektrischen Maschine andererseits bestimmt ist.

Durch die erfindungsgemäß vorgeschlagene Lösung wird eine elektrische Schnittstelle zwischen einer Elektronikkomponente und einer elektrischen Maschine bereitgestellt, die insbesondere an E-Achsen-Modulen eingesetzt werden kann und die an sämtliche, sich beim Einbau derselben ergebende geometrische Herausforderungen anpassbar ist.

Bei der erfindungsgemäß vorgeschlagenen elektrischen Verbindung kann diese entweder, wie bereits erwähnt, zwischen der Leistungselektronik und einer elektrischen Maschine zum Antrieb eines elektrisch angetriebenen Fahrzeugs hergestellt werden; eine andere Einsatzmöglichkeit der erfindungsgemäß vorgeschlagenen elektrischen Verbindung liegt darin, mit dieser eine Elektronikkomponente und eine elektrische Maschine für eine Komponente, beispielsweise eines Werkzeugs, elektrisch miteinander zu verbinden.

Durch die erfindungsgemäß vorgeschlagene Lösung besteht die Möglichkeit, beispielsweise rechteckig, quadratisch, rund oder ringförmig ausgebildete Profile aus einem elektrisch leitfähigen Material an einem unteren oder einem oberen Anschraubpunkt der elektrischen Maschine und der Elektronikkomponente so zu befestigen, dass diese einen Überlappungsbereich aufweisen, innerhalb dessen diese übereinanderliegen. Anschließend erfolgt die Verbindung der beiden übereinanderliegenden Profile mit einer Verschlusshülse aus einem verformbaren metallischen Material derart, dass eine plastische Verformung, beispielsweise über eine Verstemmung, für eine verliersichere Verbindung sorgt. Für die Montage der Verschlusshülsen kann beispielsweise ein spezielles Handhabungsgerät in Form einer Zange eingesetzt werden.

Bevor die Verschlusshülse innerhalb des Überlappungsbereichs der beiden Profile montiert wird, erfolgt der Längenausgleich, d. h. die Einstellung einer definierten Einbaulänge jeder einzelnen Stromschiene zwischen deren Anlenkpunkten beziehungsweise zwischen den miteinander zu verbindenden Komponenten in Gestalt einer Elektronikkomponente einerseits und einer elektrischen Maschine andererseits. Dadurch kann die Länge der jeweiligen Stromschiene in optimaler Weise an die Einbaulage der elektrischen Maschine angepasst werden. Es ergibt sich dadurch die Möglichkeit, ohne weitere Komponenten, insbesondere Befestigungsmaterialien, eine einfache elektrische Verbindung herzustellen, die verliersicher ist und über die Standzeit trägt.

Alternativ können verliersichere Verbindungen beispielsweise über stoffschlüssige Fügeverfahren wie das Schweißen hergestellt werden; ferner können Fügeverfahren, wie zum Beispiel das Nieten oder der Einsatz von Schneidklemmverbindungen herangezogen werden.

Die erfindungsgemäß vorgeschlagene Lösung ist so einfach ausgelegt, dass diese an allen gängigen elektrischen Maschinen zur Herstellung einer elektrischen Verbindung eingesetzt werden kann.

### Kurze Beschreibung der Zeichnungen

Ausführungsformen der Erfindung werden anhand der Zeichnungen und der nachfolgenden Beschreibung näher erläutert.

Es zeigen:
- Figur 1.1 - 1.3: unterschiedliche Einbaulagen einer elektrischen Maschine in Bezug auf eine Elektronikkomponente,
- Figur 2: eine Ausführungsvariante der erfindungsgemäß vorgeschlagenen elektrischen Verbindung,
- Figur 2.1: ein Detail einer Seitenansicht von über die Verschlusshülse miteinander verbundenen ersten und zweiten Profilen einer ersten Stromschiene,
- Figur 3: eine perspektivische Draufsicht auf eine verliersicher montierte Verschlusshülse und
- Figur 4: eine Detaildarstellung einer noch zu montierenden Verschlusshülse mit dargestellten Reibbereichen im Boden.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

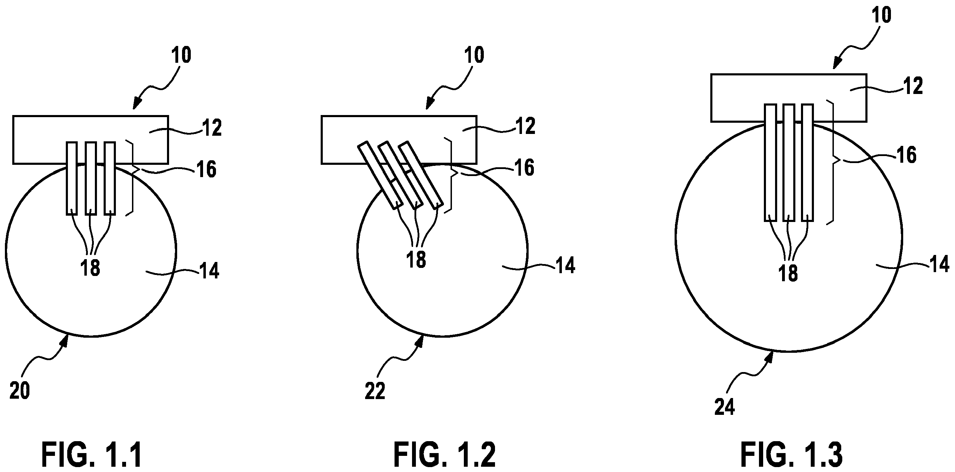

Den Figuren 1.1, 1.2 und 1.3 sind unterschiedliche Einbaulagen beziehungsweise -situationen einer elektrischen Maschine 14 in Bezug auf eine Elektronikkomponente 10 zu entnehmen.

Figur 1.1 zeigt eine elektrische Maschine 14, die in einer ersten Einbaulage 20 unterhalb der Elektronikkomponente 10 angeordnet ist. Bei der Elektronikkomponente 10 kann es sich beispielsweise um eine die elektrische Maschine 14 steuernde Leistungselektronik 12 handeln. Wie aus Figur 1.1 hervorgeht, erstrecken sich Stromleiter 18 parallel zueinander, die Teil einer elektrischen Verbindung 16 zwischen der Elektronikkomponente 10 und der elektrischen Maschine 14 sind.

Figur 1.2 ist eine zweite Einbaulage 22 der elektrischen Maschine 14 in Bezug auf die als Leistungselektronik 12 beschaffene Elektronikkomponente 10 zu entnehmen. Figur 1.2 zeigt, dass die elektrische Maschine 14 gemäß der zweiten Einbaulage 22 ebenfalls unterhalb der Elektronikkomponente 10 angeordnet ist, jedoch mit einem seitlichen Versatz.

Die parallel zueinander verlaufenden Stromleiter 18 der elektrischen Verbindung 16 sind um einen Winkel ausgelenkt, um die Elektronikkomponente 10 mit der elektrischen Maschine 14 zu verbinden.

Figur 1.3 zeigt eine Durchmesservariation 24 der elektrischen Maschine 14, deren Durchmesser im Vergleich zu den elektrischen Maschinen 14, die den Figuren 1.1 und 1.2 zu entnehmen sind, deutlich größer ist. Aus diesem Grund bedarf es einer Verlängerung der Stromleiter 18 der elektrischen Verbindung 16 zwischen der Elektronikkomponente 10 und der elektrischen Maschine 14. Gemäß der Darstellung in Figur 1.3 befindet sich die elektrische Maschine 14 analog zur Darstellung gemäß Figur 1.1 unterhalb der Elektronikkomponente 10, die eine Leistungselektronik 12 sein kann.

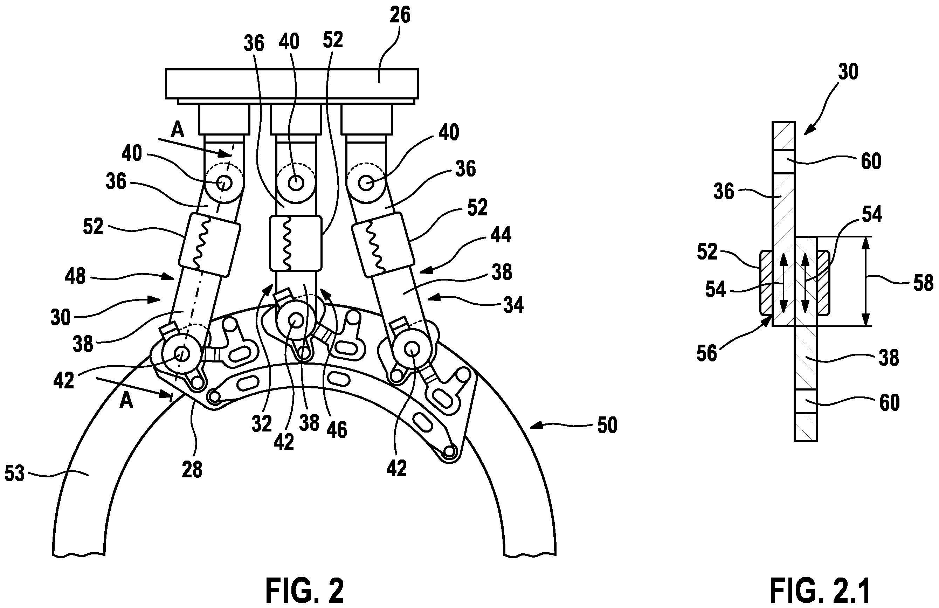

Figur 2 ist zu entnehmen, dass die elektrische Verbindung 16 ein erstes Verbindungsteil 26 umfasst, welches beispielsweise stationär in einem Bauraum aufgenommen ist und an dem beispielsweise entweder eine Elektronikkomponente 10 allgemeinster Form oder eine Leistungselektronik 12 angeschlossen sein kann. Zwischen dem ersten Verbindungsteil 26 und einem zweiten Verbindungsteil 28 erstrecken sich eine erste Stromschiene 30, eine zweite Stromschiene 32 sowie eine dritte Stromschiene 34. Das zweite Verbindungsteil 28 der elektrischen Verbindung 16 ist beispielsweise an einem Statorteil 53 der elektrischen Maschine 14 aufgenommen.

Aus der Ansicht gemäß Figur 2 ergibt sich, dass die einzelnen Stromschienen 30, 32, 34 jeweils ein erstes Profil 36 sowie ein zweites Profil 38 umfassen. Die ersten und zweiten Profile 36, 38 werden aus einem elektrisch leitfähigen Material, beispielsweise Kupfer oder Aluminium, gefertigt. Die ersten Profile 36 sind an ersten Anlenkstellen 40 des ersten Verbindungsteils 26 gelenkig gelagert, während die zweiten Profile 38 an zweiten Anlenkstellen 42 am zweiten Verbindungsteil 28 der elektrischen Verbindung 16 gelenkig gelagert sind.

Wie aus der Darstellung gemäß Figur 2 hervorgeht, sind die Einbaulängen 44, 46, 48 der drei Stromschienen 30, 32, 34 aufgrund der geometrischen Verhältnisse unterschiedlich. Wie Figur 2 weiter zeigt, sind die beiden Profile 36 und 38 jeder der drei Stromschienen 30, 32, 34 von einer Verschlusshülse 52, die aus metallischem Material gefertigt ist, völlig umschlossen. Befindet sich beispielsweise der Statorteil 53 der elektrischen Maschine 14 in der in Figur 2 dargestellten Einbauposition 50, so ist eine definierte Position des zweiten Verbindungsteils 28 gegeben. In diesem Zustand werden an den Stromschienen 30, 32, 34 jeweils die sich ergebenden Einbaulängen 44, 46, 48 zwischen dem ersten Verbindungsteil 26 und dem zweiten Verbindungsteil 28 eingestellt. Sind die definierten Einbaulängen 44, 46, 48 an jeder der drei Stromschienen 30, 32, 34 korrekt eingestellt, so erfolgt die Ausbildung der elektrischen Verbindung 16 durch die Montage der aus elastisch verformbarem metallischem Material gefertigten Verschlusshülsen 52. Diese werden beispielsweise verstemmt, so dass sich eine verliersichere Aufnahme der Verschlusshülsen 52 innerhalb eines Überlappungsbereichs 58 (vgl. Darstellung gemäß Figur 2.1) ergibt.

Des Weiteren kann durch die erfindungsgemäß vorgeschlagene elektrische Verbindung 16, wie in Figur 2 dargestellt, erreicht werden, dass aufgrund der Gelenkaufnahme der ersten und zweiten Profile 36, 38 an den ersten und zweiten Anlenkstellen 40, 42 auch Winkelversatze bei der Montage der Stromschienen 30, 32, 34 ausgeglichen werden können, ebenso wie unterschiedlich definierte Einbaulängen 44, 46, 48, die sich entsprechend der Einbauposition 50 des Statorteils 53 der elektrischen Maschine 14 unterhalb des ersten Verbindungsteils 26 zur Elektronikkomponente 10 ergeben können.

Figur 2.1 zeigt beispielhaft herausgezeichnet die erste Stromschiene 30, wobei diese das erste Profil 36 sowie das zweite Profil 38 aufweist. Entlang des Überlappungsbereichs 58 liegen die beiden Profile 36, 38 aneinander an. Bei dem Einbau entsprechend der Einbauposition 50, beispielsweise des Statorteils 53 der elektrischen Maschine 14, ergibt sich für jede der Stromschienen 30, 32, 34, also auch für die erste Stromschiene 30, eine definierte Einbaulänge. Diese wird bei der Montage durch eine Relativverschiebung 54 zwischen dem ersten Profil 36 und dem zweiten Profil 38 ausgeglichen, solange, bis eine entsprechend definierte Einbaulänge 44 für die erste Stromschiene 30, eine Einbaulänge 46 für die zweite Stromschiene 32 und eine Einbaulänge 48 für die dritte Stromschiene 34 eingestellt ist. Ist diese definierte Einbaulänge 44, 46, 48 fixiert, so erfolgt die formschlüssige Montage der aus metallischem Material gefertigten Verschlusshülse 52 innerhalb des Überlappungsbereichs 58 der Enden des ersten Profils 36 und des zweiten Profils 38. Die Verschlusshülse 52 kann beispielsweise verstemmt werden. Es bestehen auch weitere formschlüssige oder kraftschlüssige Fixierungsmöglichkeiten, die dem Fachmann geläufig sind.

Vollständigkeitshalber sei erwähnt, dass das erste Profil 36 sowie das zweite Profil 38 jeweils Profilaugen 60 umfassen, welche die gelenkige Befestigung des ersten Profils 36 an den ersten Anlenkstellen 40 des ersten Verbindungsteils 26 und des zweiten Profils 38 an den zweiten Anlenkstellen 42 des zweiten Verbindungsteils 28 der elektrischen Verbindung 16 ermöglichen.

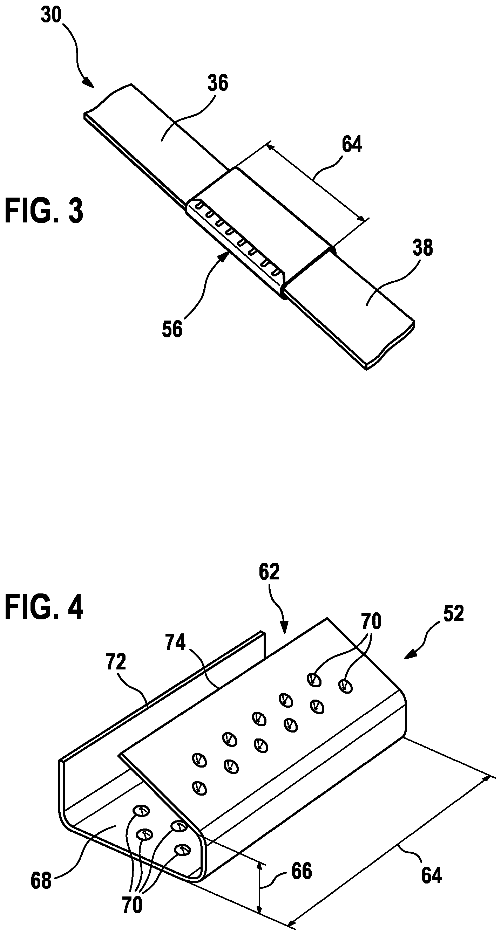

Figur 3 ist eine perspektivische Draufsicht auf einen Klemmzustand 56 der Verschlusshülse 52 zu entnehmen. Diese verbindet in ihrem hier dargestellten, montierten Zustand das Ende des ersten Profils 36 mit dem dieses überlappenden Ende des zweiten Profils 38. Durch die plastische Verformbarkeit der Verschlusshülse 52 aus metallischem Material ist die elektrische Verbindung 16 gegeben. Eine Länge der Verschlusshülse 52 ist durch Bezugszeichen 64 angedeutet.

Figur 4 zeigt eine perspektivische Draufsicht auf die Verschlusshülse 52. Diese ist in einer Länge 64 ausgebildet und hier bereits teilweise plastisch verformt. Im ursprünglichen Zustand der Verschlusshülse 52 ist diese beispielsweise ein ebenes Blech aus metallischem Material, welches innerhalb seines späteren Bodenbereichs 68 und in den an seine Enden 72, 74 angrenzenden Bereichen mit Reibelementen 70 versehen werden kann. Diese Reibelemente 70 können beispielsweise durch eine Verformung des metallischen Materials erreicht werden, eine Anrauen ist oftmals schon ausreichend. Aus der Darstellung gemäß Figur 4 ergibt sich, dass in diesem vorgeformten Zustand der Verschlusshülse 52 aus metallischem Material deren Montage an den innerhalb des Überlappungsbereichs 58 übereinanderliegenden Enden des ersten Profils 36 und des zweiten Profils 38 vorgenommen werden kann. Eine bevorzugte Ausführungsvariante der formschlüssigen Verbindung der Montagehülse 52 gemäß Figur 4 erfolgt beispielsweise durch Verstemmen.

Figur 4 zeigt des Weiteren, dass in dem dargestellten vorverformten Zustand der Verschlusshülse 52 aus metallischem Material zwischen dem ersten und dem zweiten offenen Ende 72, 74 eine Offenstellung 62 der noch unverbauten Verschlusshülse 52 vorliegt. Über die sich einstellende Öffnung zwischen dem ersten und dem zweiten Ende 72, 74 ist die Montage der Verschlusshülse 52 innerhalb des Überlappungsbereichs 58 möglich.

Bei der erfindungsgemäß vorgeschlagenen Lösung erfolgt zur Herstellung der elektrischen Verbindung 16 zwischen der Elektronikkomponente 10 und einer elektrischen Maschine 14 zunächst der Einbau einer elektrischen Maschine 14 in ihre Einbauposition 50 in der Umgebung der Elektronikkomponente 10. Danach erfolgt die Herstellung der elektrischen Verbindung 16 zwischen einem ersten Verbindungsteil 26 mit ersten Profilen 36 von Stromschienen 30, 32, 34 und einem zweiten Verbindungsteil 28 mit zweiten Profilen 38 von Stromschienen 30, 32, 34. Anschließend erfolgt die Einstellung definierter Einbaulängen 44, 46, 48 der Stromschienen 30, 32, 34 zwischen dem ersten Verbindungsteil 26 und dem zweiten Verbindungsteil 28. Schließlich erfolgt das Fixieren der ersten und zweiten Profile 36, 38 an jeder der Stromschienen 30, 32, 34 innerhalb des Überlappungsbereichs 58 des ersten und zweiten Profils 36, 38 unter Einhaltung der definierten Einbaulängen 44, 46, 48 der Stromschienen 30, 32, 34 mittels der Verschlusshülse 52.

Die erfindungsgemäß vorgeschlagene elektrische Verbindung 16 kann derart verwendet werden, dass diese zwischen einer Leistungselektronik 12 und einer von dieser gesteuerten elektrischen Maschine 14 zum Antrieb eines elektrischen Fahrzeugs eingesetzt werden kann. Daneben ergibt sich eine weitere Verwendung der erfindungsgemäß vorgeschlagenen elektrischen Verbindung 16 dahingehend, dass diese zwischen einer Elektronikkomponente und einer elektrischen Maschine 14, die zum Antrieb oder zur Betätigung einer Komponente eines Fahrzeugs, einer Anlage oder dergleichen dienen kann.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Elektrische Verbindung (16) von ersten und zweiten Profilen (36, 38) von Stromschienen (30, 32, 34) zwischen einer Elektronikkomponente (10) und einer elektrischen Maschine (14), **dadurch gekennzeichnet, dass** die an einem ersten Verbindungsteil (26) aufgenommenen ersten Profile (36) und die an einem zweiten Verbindungsteil (28) einer in ihrer Einbauposition (50) angeordneten elektrischen Maschine (14) aufgenommenen zweiten Profile (38) jeweils individuelle Einbaulängen (44, 46, 48) der Stromschienen (30, 32, 34) definieren und mittels einer Verschlusshülse (52) elektrisch miteinander verbunden sind.

2. Elektrische Verbindung (16) gemäß Anspruch 1, **dadurch gekennzeichnet, dass** die ersten Profile (36) am ersten Verbindungsteil (26) gelenkig an ersten Anlenkstellen (40) gelagert sind.

3. Elektrische Verbindung (16) gemäß Anspruch 1, **dadurch gekennzeichnet, dass** die zweiten Profile (38) gelenkig am zweiten Verbindungsteil (28) an zweiten Anlenkstellen (42) gelagert sind.

4. Elektrische Verbindung (16) gemäß den Ansprüchen 1 bis 3, **dadurch gekennzeichnet, dass** die ersten und zweiten Profile (36, 38) als Rechteckprofile, Profile mit quadratischem, rundem oder ringförmigem Querschnitt ausgeführt sind.

5. Elektrische Verbindung (16) gemäß den Ansprüchen 1 bis 4, **dadurch gekennzeichnet, dass** die Verschlusshülse (52) aus einem metallischen Material gefertigt ist.

6. Elektrische Verbindung (16) gemäß den Ansprüchen 1 bis 5, **dadurch gekennzeichnet, dass** ein Bodenbereich (68) der Verschlusshülse (52) und an deren offene Enden (72, 74) angrenzende Bereiche mit Reibelementen (70) versehen sind.

7. Elektrische Verbindung (16) gemäß den Ansprüchen 1 bis 6, **dadurch gekennzeichnet, dass** die Verschlusshülse (52) innerhalb eines Überlappungsbereichs (58) der ersten und zweiten Profile (36, 38) verliersicher befestigt ist.

8. Elektrische Verbindung (16) gemäß den Ansprüchen 1 bis 7, **dadurch gekennzeichnet, dass** die Profile (36, 38) aus einem elektrisch leitfähigen Material, insbesondere Kupfer oder Aluminium gefertigt sind.

9. Verfahren zur Herstellung einer elektrischen Verbindung (16) gemäß einem der Ansprüche 1 bis 8 zwischen einer Elektronikkomponente (10) und einer elektrischen Maschine (14) mit nachfolgenden Verfahrensschritten:
a) Einbau einer elektrischen Maschine (14) in einer Einbauposition (50) in der Umgebung einer Elektronikkomponente (10);
b) Herstellung der elektrischen Verbindung (16) zwischen einem ersten Verbindungsteil (26) mit ersten Profilen (36) von Stromschienen (30, 32, 34) und einem zweiten Verbindungsteil (28) mit zweiten Profilen (38) von Stromschienen (30, 32, 34);
c) Einstellen definierter Einbaulängen (44, 46, 48) der Stromschienen (30, 32, 34) zwischen dem ersten Verbindungsteil (26) und dem zweiten Verbindungsteil (28);
d) Fixieren der ersten und zweiten Profile (36, 38) an jeder der Stromschienen (30, 32, 34) innerhalb eines Überlappungsbereichs (58) der ersten und zweiten Profile (36, 38) unter Einhaltung der definierten Einbaulängen (44, 46, 48) der Stromschienen (30, 32, 34) mittels einer Verschlusshülse (52).

10. Verfahren gemäß Anspruch 9, **dadurch gekennzeichnet, dass** ein Längenausgleich und/oder eine Längenanpassung zwischen den ersten und zweiten Profilen (36, 38) der Stromschienen (30, 32, 34) und der Montage der Verschlusshülse (52) erfolgt.

11. Verfahren gemäß den Ansprüchen 9 und 10, **dadurch gekennzeichnet, dass** bei der Montagehülse (52) deren plastische Verformung eine verlierischere Anordnung bewirkt.

12. Verwendung der elektrischen Verbindung (16) gemäß einem der Ansprüche 1 bis 8 zwischen einer Leistungselektronik (12) und einer elektrischen Maschine (14) zum Antrieb eines elektrisch angetriebenen Fahrzeugs.

13. Verwendung der elektrischen Verbindung (16) gemäß einem der Ansprüche 1 bis 8 zwischen einer Elektronikkomponente (12) und einer elektrischen Maschine (14).
